**(19)** Europäisches Patentamt

European Patent Office

Office européen des brevets

**(11)** **EP 1 123 596 B1**

**(12)** **EUROPÄISCHE PATENTSCHRIFT**

**(45)** Veröffentlichungstag und Bekanntmachung des Hinweises auf die Patenterteilung:
**23.07.2003 Patentblatt 2003/30**

**(21)** Anmeldenummer: **99971173.2**

**(22)** Anmeldetag: **01.10.1999**

**(51)** Int Cl.$^7$: **H04J 14/02**, H04B 10/18

**(86)** Internationale Anmeldenummer:
**PCT/DE99/03178**

**(87)** Internationale Veröffentlichungsnummer:
**WO 00/025465 (04.05.2000 Gazette 2000/18)**

**(54) VERFAHREN ZUR KANALWEISEN EINSTELLUNG VON SENDESIGNALLEISTUNGEN EINES WELLENLÄNGENMULTIPLEX-ÜBERTRAGUNGSSYSTEMS**

METHOD FOR CHANNEL ADJUSTMENT OF TRANSMISSION SIGNAL POWER IN A WAVELENGTH DIVISION MULTIPLEXING TRANSMISSION SYSTEM

PROCEDE DE REGLAGE PAR CANAL DE PUISSANCES DE SIGNAUX D'EMISSION D'UN SYSTEME DE TRANSMISSION A MULTIPLEXAGE PAR REPARTITION EN LONGUEUR D'ONDE

**(84)** Benannte Vertragsstaaten:
**DE FR GB IT**

**(30)** Priorität: **23.10.1998 DE 19848989**

**(43)** Veröffentlichungstag der Anmeldung:
**16.08.2001 Patentblatt 2001/33**

**(73)** Patentinhaber: **SIEMENS AKTIENGESELLSCHAFT**
**80333 München (DE)**

**(72)** Erfinder:
• **WEISKE, Claus-Jörg**
**D-82256 Fürstenfeldbruck (DE)**

• **KRUMMRICH, Peter**
**D-81379 München (DE)**

**(56)** Entgegenhaltungen:
EP-A- 0 734 129          EP-A- 0 865 173
US-A- 5 790 289          US-A- 5 815 299

• **CHRAPLYVY A R ET AL: "EQUALIZATION IN AMPLIFIED WDM LIGHTWAVE TRANSMISSION SYSTEMS" IEEE PHOTONICS TECHNOLOGY LETTERS,US,IEEE INC. NEW YORK, Bd. 4, Nr. 8, 1. August 1992 (1992-08-01), Seiten 920-922, XP000293636 ISSN: 1041-1135 in der Anmeldung erwähnt**

**Beschreibung**

Optische Wellenlängenmultiplex-Übertragungssysteme weisen aufgrund der Wellenlängenabhängigkeit von optischen Verstärkern, Dämpfungen in den Übertragungsfasern und in passiven optischen Komponenten sowie durch nichtlineare Effekte wie Signalverkopplungen durch stimmulierte Ramanstreuung im allgemeinen für die unterschiedlichen Signale bzw. Kanäle unterschiedliche Dämpfungswerte auf. Diese Effekte können sich bei einer optischen Übertragungsstrecke, die aus mehreren Strekkenabschnitten mit mehreren Faserverstärkern besteht, addieren. Als Folge hiervon werden auf der Empfangsseite die schwächeren optischen Signale vom optischen Empfänger nicht mehr fehlerfrei detektiert, weil deren Pegel zu klein sind oder weil deren optisches Signal-Rasch-Verhältnis (OSNR - Optical Signal-to-Noise-Ratio) zu klein ist. Andererseits kann bei einem weniger gedämpften Signal der maximal zulässige Eingangspegel des optischen Empfängers überschritten werden.

Ein in bestehenden optischen Übertragungssystemen angewendetes Verfahren zum Ausgleichen der unterschiedlichen Pegeloder OSNR-Werte besteht in einer entsprechenden Vorkompensation auf der Sendeseite, die sog. Preemphase. Hierbei wird die Pegel- oder OSNR-Verteilung der Kanäle/Signale auf der Empfangsseite mit Hilfe eines optischen Sektrumsanalysators gemessen und durch sendeseitige Anhebung des Pegels der am Empfänger stark gedämpft ankommenden Signale sowie durch entsprechende Absenkung des Pegels der leistungsstärkeren Signale dafür gesorgt, daß alle Empfangssignale auf der Empfangsseite die gleiche Leistung (Pegelbalance) oder das gleiche Signal-Rausch-Verhältnis (ONSR-Balance) haben. Die Anhebung bzw. Absenkung des Sendesignalpegels wird für jeden Kanal bzw. jedes Sendesignal meist so gewählt, daß die Sendesignal-Summenleistung (Summe der Leistungen aller Sendesignale bzw. des Summensignals) am Anfang der optischen Strecke unverändert bleibt, bzw. einen Maximalwert nicht überschreitet.

Geeignete Algorithmen für die Pegel- und OSNR-Balance sind in dem Beitrag Equalisation in Amplified WDM Lightwave Transmission Systems in IEEE Photonics. Technologie Letters, Vol. 4, No. 8, August 1992, Seite 920 bis 922 beschrieben.

Bei Anwendung eines exakt durchgeführten Pegel- oder OSNR-Ausgleichs können jedoch folgende Nachteile auftreten: Eine vollständige Pegel-Balance für die Empfangsseite kann wegen der Wellenlängenabhängigkeit der Streckendämpfung auf der Sendeseite eine zu hohe Pegeldynamik, d.h. einen zu großen Quotienten zwischen maximaler und minimaler Kanalleistung, hervorrufen. Dann besteht die Gefahr, daß Signale mit angehobenem Sendepegel durch nichtlineare Effekte der Faser verzerrt werden und/oder Sendesignale mit stark abgesenktem Pegel bereits die minimale Eingangsleistung eines optischen Verstärkers unterschreiten, so daß erhebliche Signalverzerrung durch Rauschen die Folge sind.

Auch eine vollständige OSNR-Balance für die Empfangsseite kann auf der Sendeseite eine zu hohe Pegeldynamik bewirken.

Zusätzlich besteht die Gefahr, daß der zulässige Eingangspegelbereich eines oder mehrerer der angeschlossenen optischen Empfänger über- oder unterschritten wird.

Aus dem US-Patent 5,815,299 sind ein Verfahren und eine Anordnung zur Einstellung gleicher Signalpegel bekannt. Bei diesem Verfahren wird der Durchschnittspegel aller übertragenen Signale und der Pegel des schwächsten Signals ermittelt. Entsprechend der Differenz zwischen dem Durchschnittspegel und dem Pegel des schwächsten Signals werden die übrigen Signale gedämpft (Spalte 6, Zeilen 56 - 67). Dies Verringert aber den Durchschnittspegel und damit die Qualität aller übrigen Kanäle. Ein solches Verfahren führt zwar zu gleichen Pegeln in allen Kanälen erreicht aber keine optimale Nutzung des möglichen Dynamikbereichs und damit keine optimale Übertagungsqualität und keine optimale Reichweite.

Aufgabe der Erfindung ist es daher, bei Wellenlängenmultiplexsystemen Verfahren zur kanalweisen Einstellung von Sendesignalleistungen anzugeben, bei denen der sendeseitige Dynamikbereich ohne unnötige Beeinträchtigung der Übertragungsqualität eingehalten wird. Ein erweitertes Verfahren berücksichtigt auch den empfangsseitigen Dynamikbereich bei exakter OSNR-Balance.

Die Aufgabe wird durch Verfahren gelöst, die in den unabhängigen Ansprüchen 1 bzw. 4 angegeben sind.

Vorteilhafte Weiterbildungen der Erfindung sind in den Unteransprüchen angegeben.

Im allgemeinen ist auf der Empfangsseite keine exakte Pegel-Balance erforderlich, da die angeschlossenen optischen Empfänger einen beträchtlichen Pegel-Dynamikbereich aufweisen, in dem sie optimal arbeiten. Ebenso ist keine exakte OSNR-Balance erforderlich, wenn entsprechende Systemreserven vorhanden sind. In diesem Fall ist ein Verfahren optimal, das lediglich den Dynamikbereich der Sendesignale berücksichtigt. Da im allgemeinen die Systeme mit einer optimalen bzw. maximal zulässigen Summenleistung arbeiten, ist es vorteilhaft, wenn diese bei einer etwa erforderlichen Komprimierung der einzelnen Sendesignalleistungen konstant bleibt.

Bei einer OSNR-Balance muß jedoch auch empfangsseitig der zulässige Dynamikbereich überprüft werden. Im Bedarfsfall erfolgt eine Anpassung der der Empfangssignal-Leistungen durch Kompression. Diese erfolgt wiederum durch Änderung der Leistung der einzelnen Sendesignale. Auch hier muß die Einhaltung des sendeseitigen Dynamikbereichs nochmals überprüft und ggegebenenfalls geändert werden.

Die Erfindung wird anhand eines Ausführungsbeispiels näher erläutert.

Es zeigen:

Figur 1 ein Ausführungsbeispiel einer WDM-Übertragungseinrichtung mit Dynamikkompression,
Figur 2 ein Ablaufdiagramm zur sendeseitigen Dynamikkompression und
Figur 3 ein Ablaufdiagramm zur empfangsseitigen Dynamikkompression.

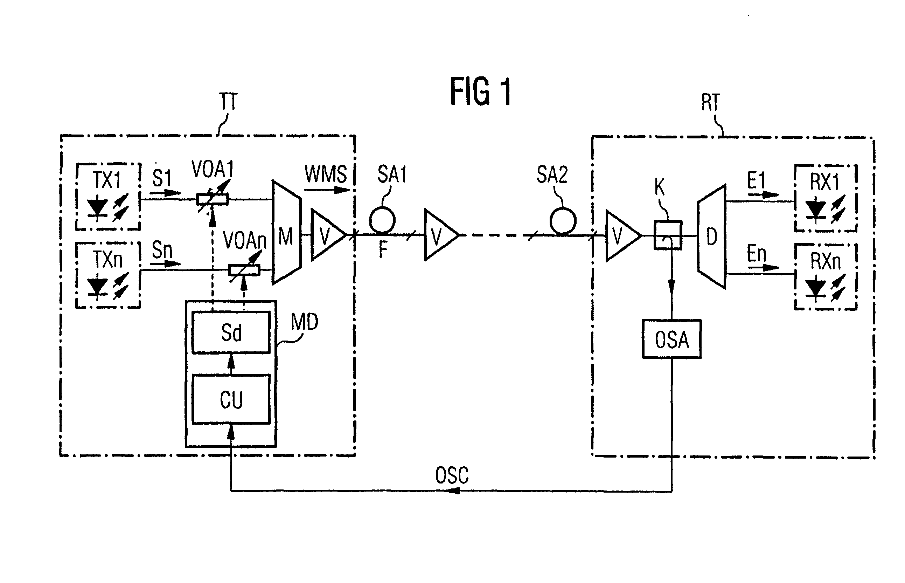

**Figur 1** zeigt das Prinzipschaltbild einer WDM-Übertragungseinrichtung. In einem Sendeterminal TT sind mehrere optische Sender TX1 bis TXn zum Übertragen von Daten über unterschiedlichen Wellenlängen zugeordneten Kanälen vorgesehen. Die entsprechenden Sendesignale S1 bis Sn werden über einstellbare optische Dämpfungsglieder VOA1 bis VOAn geführt und von einem Multiplexer M zu einem Wellenlängen-Multiplexsignal WMS zusammengefaßt. Dieses Signal wird in eine optische Faser F eingespeist und über verschiedene Streckenabschnitte SA1, SA2 zu einem Empfangsterminal RT übertragen. Um die Dämpfung durch die optische Faser auszugleichen sind verschiedene optische Verstärker V vorgesehen. Im Empfangsterminal RT wird das Wellenlängen-Multiplexsignal in einem Demultiplexer D in einzelne Empfangssignale E1 bis En zerlegt, die jeweils einem optischen Empfänger RX1 bis RXn zugeführt werden.

Das Wellenlängenmultiplexsignal wird empfangsseitig durch einen Koppler K, der dem Demultiplexer vorgeschaltet ist, aufgesplittet und einem optischen Spektrumanalysator OSA zugeführt. Die von diesem gemessene Pegel- und OSNR-Werte werden - beispielsweise über einen gesonderten Steuerkanal OSC (Optical Supervisory Channel) - an ein Preemphase-Steuergerät MD im Sendeterminal geführt. Dieses besteht aus einer Recheneinrichtung CU und einer Einstelleinrichtung SD, die die Sendepegel der einzelnen Sendesignale einstellt, beispielsweise durch Steuerung der Ausgangsleistung der optischen Sender oder hier durch Einstellen der Dämpfungsglieder. Die Recheneinheit kann ebenso auf der Empfangsseite vorgesehen sein.

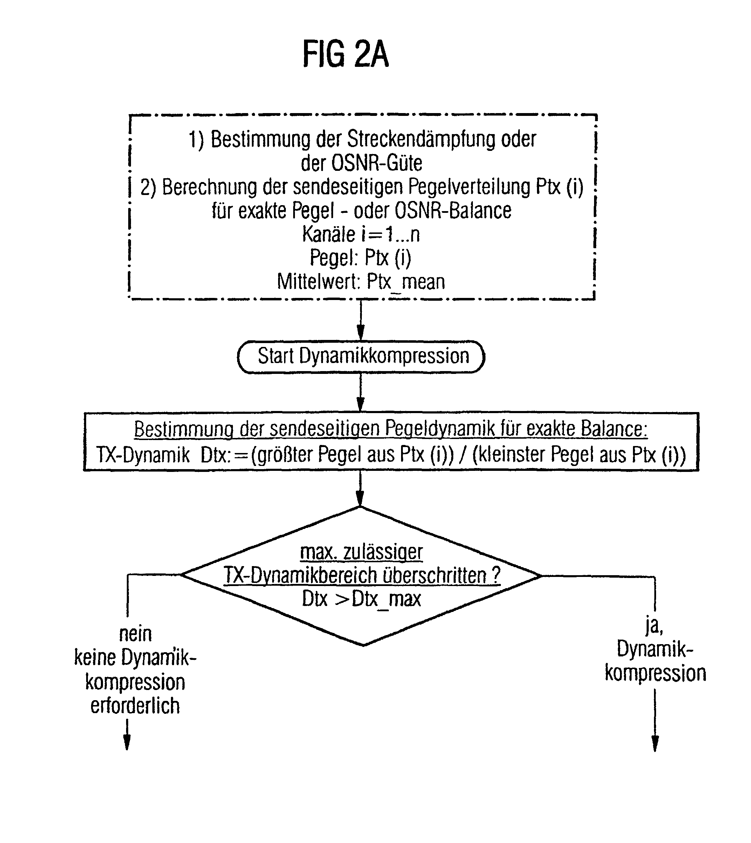

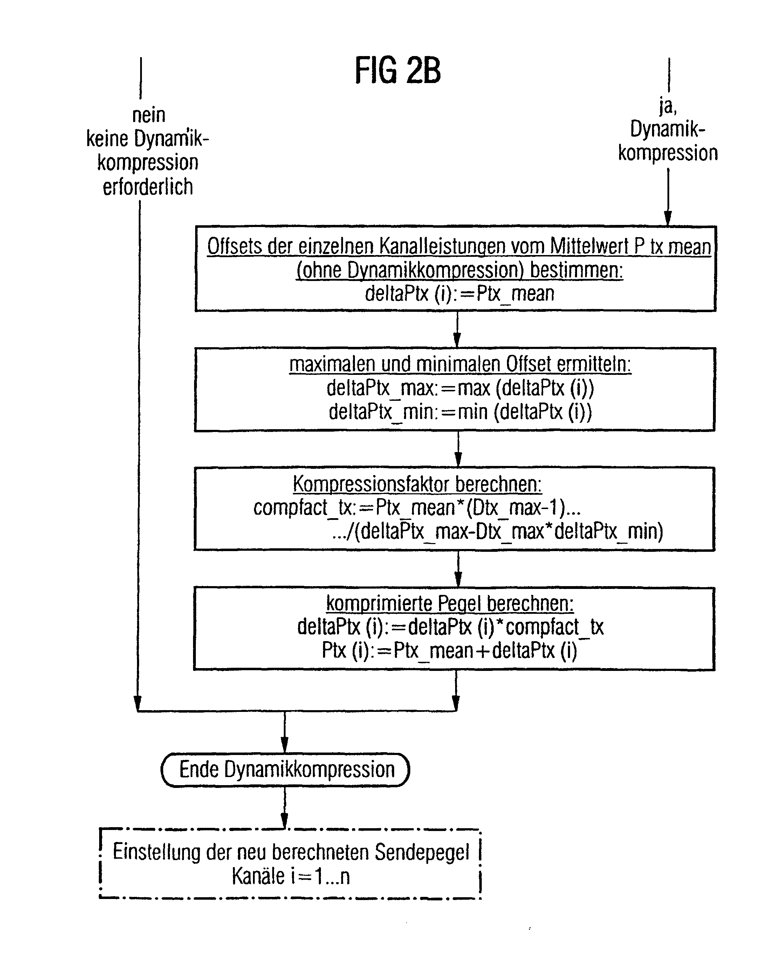

Zunächst wird der Fall betrachtet, daß nur eine Einstellung des sendeseitigen Dynamikbereichs anhand des Ablaufdiagramms **Figur 2** erfolgt. Die einzelnen Sendeleistungen und Empfangsleistungen bzw. Sendeleistungen und die empfangsseitigen Signal-Rauschen-Abstände, kurz die Dämpfungen der einzelnen Kanäle oder die OSNR-Güte (Rauschabstand/Sendeleistung) müssen in der Regel durch Messungen bekannt sein.

Als erstes erfolgt dann eine Berechnung der sendeseitigen Leistungsverteilung (Pegelverteilung) für eine exakte Pegeloder OSNR-Balance auf der Empfangsseite, bei der von den vorstehen aufgeführten Übertragungseigenschaften der einzelnen Kanäle ausgegangen wird.

Anschließend kann die Dynamikkompression gestartet werden. In einem ersten Schritt wird ermittelt, wie groß die sendeseitige Pegeldynamik Dtx ist. Diese entspricht den Quotienten aus größtem Pegel Ptx_max und kleinstem Pegel Ptx_min der Sendesignale, wobei unter Pegel hier die Leistung in einem linearen Maßstab verstanden wird, beispielsweise in Milliwatt.

F1) $Dtx$ = größter Pegel aus $Ptx(i)$/kleinster Pegel aus $Ptx(i)$   $i = 1, 2, ... n$ - Sendesignal

Anschließend erfolgt die Überprüfung, ob der festgestellte Dynamikbereich Dtx größer als der zulässige Dynamikbereich Dtx_max ist. Ist dies nicht der Fall, erfolgt keine Dynamikkompression. Wenn dies jedoch der Fall ist, erfolgt in den nächsten Rechenschritt die Berechnung der Abweichung, des Offsets, der einzelnen Signalleistungen vom Mittelwert Ptx_mean, der aus der optimalen oder maximal zulässigen Sendeleistung des sendeseitigen Wellenlängen-Multiplexsignal dividiert durch die Anzahl der Signale ermittelt wurde.

F2) $deltaP\_tx(i) := Ptx(i) - Ptx\_mean$

Im folgenden Rechenschritt wird der absolute maximale und minimale Offset, d.h. der Offset des stärksten und schwächsten Sendesignals ermittelt.

F3) $deltaPtx\_max := max(deltaPtx(i))$

$deltaPtx\_min := min(deltaPtx(i))$

Danach erfolgt die Berechnung des Sende-Kompressionsfaktors

$$F4) \quad compfact\_tx := Ptx\_mean*(Dtx\_max - 1)/$$

$$(deltaPtx\_max - Dtx\_max*deltaPtx\_min)$$

Dieser wird zur Berechnung der komprimierten Pegel entsprechend

$$F5) \quad deltaPtx(i) := deltaPtx(i) * compfact\_tx$$

$$Ptx(i) := Ptx\_mean + deltaP\_tx(i)$$

verwendet.

Hiermit ist die Dynamikkompression fertig berechnet und es kann die Einstellung der neu berechneten komprimierten Sendepegel $Ptx(i)$ der Sendesignale S1 bis Sn erfolgen.

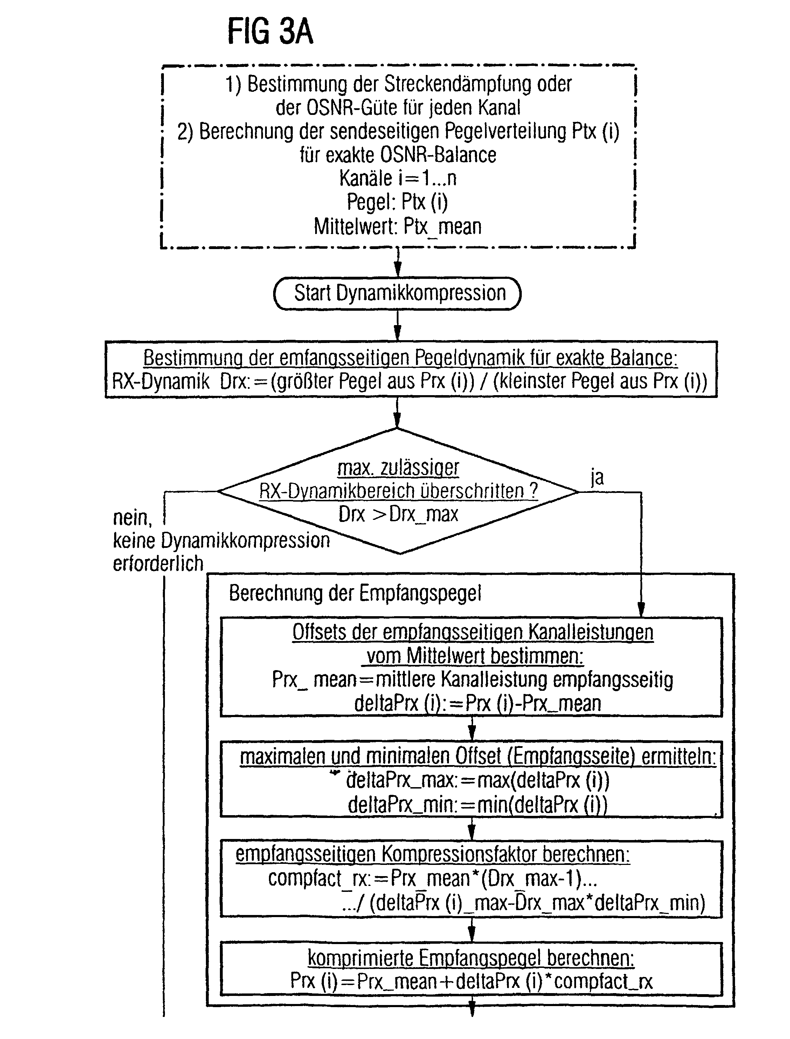

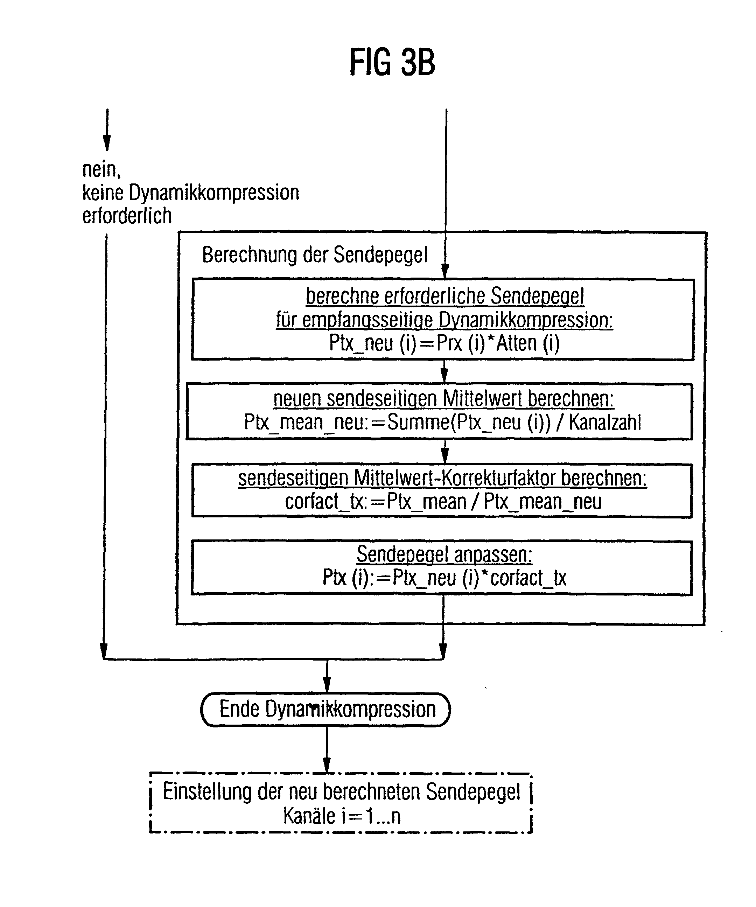

Wenn die einzelnen Empfangssignale E1 bis En dasselbe Signal-Rausch-Verhältnis aufweisen sollen, also von einer OSNR-Balance ausgegangen wird, kann in einem erweiterten Verfahren nach Figur3 zusätzlich eine empfangsseitige Dynamikkompression durchgeführt werden. Voraussetzung für das Kompressionsverfahren ist wieder, daß die Übertragungseigenschaften für jeden Kanal bekannt sind.

Hierdurch wird die Berechnung der sendeseitigen Pegel für die einzelnen Sendesignale, die Pegelverteilung, für eine OSNR-Balance möglich.

Die empfangsseitige Dynamikkompression beginnt mit der Bestimmung der empfangsseitigen Dynamik Drx.

$$F7) \quad Drx := \text{größter Pegel aus } Prx(i)/\text{kleinster Pegel aus } Prx(i) \quad i = 1, 2, ...,n - \text{Empfangssignal}$$

Es folgt die Überprüfung, ob die zulässige empfangsseitige Dynamik Drx überschritten ist. Falls nein, ist eine empfangsseitige Dynamikkompression nicht erforderlich und die errechneten Signalpegel können sendeseitig eingestellt werden. Im allgemeinen ist noch eine Überprüfung der zulässigen sendeseitigen Dynamik erforderlich.

Ist dagegen die zulässige empfangsseitige Dynamik Drx überschritten, so werden zunächst die Abweichungen, die Offsets, der empfangsseitigen Kanalleistungen $Ptx(i)$ vom Mittelwert $Ptx\_mean$ bestimmt:

$$F7) \quad deltaP\_rx(i) := P\_rx(i) - P\_rx\_mean$$

und die maximalen und minimalen Offsets ermittelt:

$$F8) \quad deltaP\_rx\_max := max(deltaP\_rx(i))$$

$$deltaP\_rxmin := min(deltaP\_rx(i))$$

Anschließend wird empfangsseitiger Kompressionsfaktor berechnet:

$$F9) \quad compfact\_rx := Prx\_mean*(Drx\_max - 1)$$

$$/ (deltaPrx\_max - Drx\_max * deltaPrx\_min$$

Hieraus erfolgt die Ermittlung der komprimierten Empfangspegel

$$F10) \quad Prx(i) := Prx\_mean * deltaPrx(i) * compfact\_rx$$

Mit Hilfe der bereits ermittelten kanalindividuellen Strekkendämpfung $Atten(i)$ können aus den komprimierten Empfangspegeln die zugehörigen Sendepegel ermittelt werden

$$F11) \quad Ptx\_neu(i) = Prx(i) * Atten(i)$$

Es kann erforderlich sein, die Sendesignalleistungen zu verringern, falls die zulässige Summenleistung überschritten ist, oder es ist sinnvoll, die Sendesignalleistungen zu erhöhen, um die Übertragungseigenschaften zu verbessern. Beides erfolgt durch eine sendeseitige Pegelanpassung. Es wird hierzu ein neuer sendeseitiger Mittelwert berechnet werden:

$$F12) \quad Ptx\_mean\_neu = Summe \ (Ptx\_neu(i)/Kanalzahl)$$

Hieraus wird ein sendeseitiger Korrekturfaktor bestimmt;

$$F13) \quad corfact\_tx = Ptx\_mean/Ptx\_mean\_neu$$

Es folgt die Berchnung der neuen Sendepegel:

$$F14) \quad Ptx(i) = Ptx\_neu(i) * corfact\_tx$$

Hiermit ist die Berechnung der Dynamikkompression beendet und es erfolgt die Einstellung der neu errechneten Sendepegel.

Bei der Dynamikkompression müssen natürlich Signalausfälle berücksichtigt werden. Die Zeitkonstanten des Regelkreises werden an die Erfordernisse angepaßt.

**Patentansprüche**

**1.** Verfahren zur kanalindividuellen Einstellung von Sendesignalleistungen eines Wellenlängenmultiplex-Übertragungssystems,
bei dem die Übertragungseigenschaften für jeden Übertragungskanal ermittelt werden und
für gleiche Signalleistungen oder gleiche Signal-Rausch-Verhältnisse der einzelnen Empfangssignale (E1 bis En) die Signalleistungen der zugehörigen Sendesignale (S1 bis Sn) kanalindividuell ermittelt werden,
**dadurch gekennzeichnet,**
**daß** der sendeseitige Dynamikbereich (Dtx) ermittelt wird,
**daß** bei Überschreitung des sendeseitig zulässigen Dynamikbereichs (Dtx_max) die individuellen Leistungsabweichungen (delta Ptx(i), i = 1, 2, ...n) der Sendesignale (S1 bis Sn) von einer mittleren Sendesignalleistung (Ptx_mean) ermittelt werden und die individuellen Leistungsabweichungen der Sendesignale (S1 bis Sn) mit einem für alle Sendesignale (S1 bis Sn) gleichen Sende-Kompressionsfaktor (compfact_tx) rechnerisch derart verringert werden, daß der zulässige Dynamikbereich eingehalten wird,
**daß** die erforderlichen Sendesignalleistungen (Ptx_neu(i)) neu berechnet werden und
**daß** die neu berechneten komprimierten Sendesignalleistungen (Ptx_neu(i)) eingestellt werden.

**2.** Verfahren nach Anspruch 1,
**dadurch gekennzeichnet,**
**daß** die insgesamt zulässige Sendesignal-Summenleistung aller Sendesignale (S1 bis Sn) zumindest annähernd konstant gehalten wird.

**3.** Verfahren nach Anspruch 1 oder 2,
**dadurch gekennzeichnet,**
**daß** die Sendesignalleistungen (Ptx(i)) der Sendesignale (S1 bis Sn) und daraus abgeleiteten sendeseitigen Werte (Dtx, delta Ptx(i), Ptx_mean) durch Messung der Empfangssignalleistungen der Empfangssignale (E1 bis En) und aus den Übertragungseigenschaften der Übertragungskanäle ermittelt werden.

**4.** Verfahren zur kanalindividuellen Einstellung von Sendesignalleistungen eines Wellenlängenmultiplex-Übertragungssystems,
bei dem die Übertragungseigenschaften für jeden Übertragungskanal ermittelt werden und

für gleiche Signal-Rausch-Verhältnisse der einzelnen Empfangssignale (E1 bis En) die Leistungen (Ptx(i)) der zugehörigen Sendesignale (S1 bis Sn) kanalindividuell ermittelt werden,

**dadurch gekennzeichnet,**

**daß** der empfangsseitige Dynamikbereich (Drx) ermittelt wird, daß bei einer Überschreitung des empfangsseitig zulässigen Dynamikbereichs (Drx_max) die individuellen Leistungsabweichungen (delta Prx(i), i = 1, 2, ...n) Sendesignalleistungen von einer mittleren Empfangsleistung (Ptx_mean) ermittelt werden und die individuellen Leistungsabweichungen der Empfangssignale (E1 bis En) mit einem für alle Empfangssignale (E1 bis En) gleichen Kompressionsfaktor (compfact_rx) rechnerisch derart verringert werden, daß der empfangsseitig zulässige Dynamikbereich eingehalten wird,

**daß** die erforderlichen neuen Sendesignalleistungen (Ptx_neu(i)) berechnet werden,

**daß** gegebenenfalls mit Hilfe eines zu berechnenden sendeseitigen Korrekturfaktors (corfact_tx) eine sendeseitige Leistungskorrektur durchgeführt wird und

**daß** die neu berechneten komprimierten Sendesignalleistungen (Ptx_neu(i); Ptx(i)) eingestellt werden.

**5.** Verfahren nach Anspruch 4,

**dadurch gekennzeichnet,**

**daß** die Empfangssignal-Summenleistung (Prx_mean) aller Empfangssignale (E1 bis En) und/oder die Sendesignal-Summenleistung (Ptx_mean) aller Sendesignale (S1 bis Sn) zumindest annähernd konstant gehalten wird.

**6.** Verfahren nach Anspruch 4 oder 5,

**dadurch gekennzeichnet,**

**daß** die Sendesignalleistungen (Ptx(i)) der Sendesignale (S1 bis Sn) und daraus abgeleiteten sendeseitigen Werte (Dtx, delta Ptx(i), Ptx mean) durch Messung der Empfangssignalleistungen der Empfangssignale (E1 bis En) und aus den Übertragungseigenschaften der Übertragungskanäle ermittelt werden.

**7.** Verfahren nach Anspruch 4 oder 6,

**dadurch gekennzeichnet,**

**daß** der sendeseitige Korrekturfaktor (corfact_tx) aus dem Verhältnis eines bisherigen sendeseitigen Pegelmittelwertes (Ptx_mean) zu einem aus den erforderlichen neuen Sendesignalleistungen (Ptx_neu(i)) ermittelten sendeseitigen Pegelmittelwert (Ptx_mean_neu) errechnet wird und

**daß** die individuellen Signalleistungen (Ptx(i)) der Sendesignale (S1 bis Sn) mit diesem für alle Sendesignale (S1 bis Sn) gleichen sendeseitigen Korrekturfaktor (corfact_tx) derart geändert werden, daß die insgesamt zulässige Sendesignal-Summenleistung aller Sendesignale (S1 bis Sn) zumindest annähernd konstant gehalten wird.

## Claims

**1.** Method for channel-specific adjustment of transmitted signal power levels in a wavelength-division multiplex transmission system,

in which the transmission characteristics for each transmission channel are determined and

if the signal power levels or the signal-to-noise ratios of the individual received signals (E1 to En) are the same, the signal power levels of the associated transmitted signals (S1 to Sn) are determined on a channel-specific basis,

**characterized**

**in that** the transmission-end dynamic range (Dtx) is determined,

**in that**, if the maximum permissible dynamic range (Dtx_max) at the transmission end is exceeded, the individual power discrepancies (delta Ptx(i), i = 1, 2, ...n) of the transmitted signals (S1 to Sn) from the mean transmitted signal power level (Ptx_mean) are determined and the individual power discrepancies of the transmitted signals (S1 to Sn) are reduced by calculation, using a transmission compression factor (compfact_tx), which is the same for all the transmitted signals (S1 to Sn), in such a manner that the maximum permissible dynamic range is complied with, in that the required transmission signal power levels (Ptx_new(i)) are recalculated, and

**in that** the newly calculated compressed transmitted signal power levels (Ptx_new(i)) are set.

**2.** Method according to Claim 1,

**characterized**

**in that** the total maximum permissible total transmitted signal power level of all the transmitted signals (S1 to Sn) is kept at least approximately constant.

**3.** Method according to Claim 1 or 2,

**characterized**

**in that** the transmitted signal power levels (Ptx(i)) of the transmitted signals (S1 to Sn) and transmission-end values (Dtx, delta Ptx(i), Ptx_mean) derived from them are determined by measuring the received signal power levels of the received signals (E1 to En) and from the transmission characteristics of the transmission channels.

4. Method for channel-specific adjustment of transmitted signal power levels in a wavelength-division multiplex transmission system,
   in which the transmission characteristics for each transmission channel are determined and
   if the signal-to-noise ratios of the individual received signals (E1 to En) are the same, the power levels (Ptx(i)) of the associated transmitted signals (S1 to Sn) are determined on a channel-specific basis,
   **characterized**
   **in that** the reception-end dynamic range (Drx) is determined,
   **in that**, if the maximum permissible reception-end dynamic range (Drx_max) is exceeded, the individual power discrepancies (delta Prx(i), i = 1, 2, ...n) of the transmitted signal power levels from the mean received power level (Ptx_mean) are determined, and the individual power discrepancies of the received signals (E1 to En) are reduced by calculation using a compression factor (compfact_rx) which is the same for all the received signals (E1 to En), in such a manner that the maximum permissible dynamic range at the reception end is complied with,
   **in that** the required new transmitted signal power levels (Ptx_new(i)) are calculated,
   **in that**, if necessary, transmission-end power correction is carried out using a transmission-end correction factor (corfact_tx) which needs to be calculated, and
   **in that** the newly calculated compressed transmission signal power levels (Ptx_new(i); Ptx(i)) are set.

5. Method according to Claim 4,
   **characterized**
   **in that** the total received signal power level (Prx_mean) of all the received signals (E1 to En) and/or the total transmitted signal power level (Ptx_mean) of all the transmitted signals (S1 to Sn) is kept at least approximately constant.

6. Method according to Claim 4 or 5,
   **characterized**
   **in that** the transmitted signal power levels (Ptx(i)) of the transmitted signals (S1 to Sn) and transmission-end values (Dtx, delta Ptx(i), Ptx_mean), derived from them, are determined by measurement of the received signal power levels of the received signals (E1 to En) and from the transmission characteristics of the transmission channels.

7. Method according to Claim 6,
   **characterized**
   **in that** the transmission-end correction factor (corfact_tx) is calculated from the ratio of the previous transmission-end mean level value (Ptx_mean) to a transmission-end mean level value (Ptx_mean_new) determined from the required new transmitted signal power level (Ptx_new(i)), and
   **in that** the individual signal power levels (Ptx(i)) of the transmitted signals (S1 to Sn) are changed using this transmission-end correction factor (corfact_tx), which is the same for all the transmitted signals (S1 to Sn), in such a manner that the total maximum permissible total transmitted signal power level of all the transmitted signals (S1 to Sn) is kept at least approximately constant.

**Revendications**

1. Procédé de réglage par canal individuel de puissances de signaux d'émission d'un système de transmission à multiplexage par répartition en longueur d'onde,
   dans lequel les caractéristiques de transmission sont déterminées pour chaque canal de transmission et,
   pour des puissances de signaux identiques ou des rapports signal-bruit identiques des signaux de réception individuels (E1 à En), on détermine les puissances de signaux des signaux d'émission associés (S1 à Sn) individuellement pour chaque canal,
   **caractérisé en ce qu'**on détermine la plage dynamique sur le côté d'émission (Dtx),
   **en ce que**, en cas de dépassement de la plage dynamique autorisée sur le côté d'émission (Dtx_max), on détermine les écarts de puissance individuelle (delta Ptx(i), i = 1, 2, ...n) des signaux d'émission (S1 à Sn) par rapport à une puissance moyenne de signaux d'émission (Ptx_mean) et on réduit les écarts de puissance individuelle des signaux d'émission (S1 à Sn), par le calcul, à l'aide d'un facteur de compression d'émission (compfact_tx) identique pour tous les signaux d'émission (S1 à Sn), de manière à respecter la plage dynamique autorisée,
**en ce que** les puissances de signaux d'émission nécessaires (Ptx_neu(i)) sont calculées à nouveau et
**en ce que** les puissances de signaux d'émission comprimés (Ptx-neu(i)) nouvellement calculées sont réglées.

2. Procédé selon la revendication 1, **caractérisé en ce que** la puissance cumulée de signaux d'émission globalement autorisée de tous les signaux d'émission (S1 à Sn) est maintenue au moins à peu près constante.

3. Procédé selon la revendication 1 ou 2, **caractérisé en ce que** les puissances de signaux d'émission (Ptx(i)) des signaux d'émission (S1 à Sn) et les valeurs du côté d'émission (Dtx, delta Ptx(i), Ptx_mean) qui en sont déduites sont déterminées par la mesure des puissances de signaux de réception des signaux de réception (E1 à En) et à partir des caractéristiques de transmission des canaux de transmission.

4. Procédé de réglage par canal individuel de puissances de signaux d'émission d'un système de transmission à multiplexage par répartition en longueur d'onde,
dans lequel les caractéristiques de transmission sont déterminées pour chaque canal de transmission et,
pour des rapports signal-bruit identiques des signaux de réception individuels (E1 à En), on détermine les puissances (Ptx(i)) des signaux d'émission associés (S1 à Sn) individuellement pour chaque canal,
**caractérisé en ce qu'**on détermine la plage dynamique sur le côté de réception (Drx),
**en ce que**, en cas de dépassement de la plage dynamique autorisée sur le côté de réception (Drx_max), on détermine les écarts de puissance individuelle (delta Prx(i), i = 1, 2, ...n) entre les puissances de signaux d'émission et une puissance de réception moyenne (Ptx_mean) et on réduit les écarts de puissance individuelle des signaux de réception (E1 à En), par le calcul, à l'aide d'un facteur de compression (compfact_rx) identique pour tous les signaux de réception (E1 à En), de manière à respecter la plage dynamique autorisée sur le côté de réception,
**en ce que** les nouvelles puissances de signaux d'émission nécessaires (Ptx_neu(i)) sont calculées,
**en ce que** l'on procède, le cas échéant, à une correction des puissances sur le côté d'émission à l'aide d'un facteur de correction du côté d'émission (corfact_tx) qu'il faut calculer et
**en ce que** les puissances de signaux d'émission comprimés (Ptx-neu(i) ; Ptx(i)) nouvellement calculées sont réglées.

5. Procédé selon la revendication 4, **caractérisé en ce que** la puissance cumulée de signaux de réception (Prx_mean) de tous les signaux de réception (E1 à En) et/ou la puissance cumulée de signaux d'émission (Ptx_mean) de tous les signaux d'émission (S1 à Sn) est/sont maintenue/s au moins à peu près constante/s.

6. Procédé selon la revendication 4 ou 5, **caractérisé en ce que** les puissances de signaux d'émission (Ptx(i)) des signaux d'émission (S1 à Sn) et les valeurs du côté d'émission (Dtx, delta Ptx(i), Ptx_mean) qui en sont déduites sont déterminées par la mesure des puissances de signaux de réception des signaux de réception (E1 à En) et à partir des caractéristiques de transmission des canaux de transmission.

7. Procédé selon la revendication 4 ou 6, **caractérisé en ce que** le facteur de correction sur le côté d'émission (corfact_tx) est calculé à partir du rapport entre une valeur moyenne des niveaux (Ptx_mean) existant jusqu'à présent sur le côté d'émission et une valeur moyenne des niveaux (Ptx_mean_neu) sur le côté d'émission déterminée à partir des nouvelles puissances de signaux d'émission (Ptx_neu(i)) nécessaires et
**en ce que** les puissances de signaux individuels (Ptx(i)) des signaux d'émission (S1 à Sn) sont modifiées à l'aide de ce facteur de correction du côté d'émission (corfact_tx) identique pour tous les signaux d'émission (S1 à Sn) de manière à maintenir la puissance cumulée de signaux d'émission globalement autorisée de tous les signaux d'émission (S1 à Sn) au moins à peu près constante.

FIG 1

RT

RX1  RXn

E1  En

D

K

V

OSA

SA2

V

OSC

SA1

F

WMS

V

M

TT

VOA1

VOAn

S1  Sn

TX1  TXn

MD

Sd

CU

# FIG 2A

1) Bestimmung der Streckendämpfung oder
der OSNR-Güte
2) Berechnung der sendeseitigen Pegelverteilung Ptx (i)
für exakte Pegel - oder OSNR-Balance
Kanäle i = 1...n
Pegel: Ptx (i)
Mittelwert: Ptx_mean

Start Dynamikkompression

Bestimmung der sendeseitigen Pegeldynamik für exakte Balance:
TX-Dynamik  Dtx: = (größter Pegel aus Ptx (i)) / (kleinster Pegel aus Ptx (i))

max. zulässiger
TX-Dynamikbereich überschritten ?
Dtx > Dtx_max

nein
keine Dynamikkompression
erforderlich

ja,
Dynamikkompression

# FIG 2B

nein
keine Dynamikkompression
erforderlich

ja,
Dynamikkompression

Offsets der einzelnen Kanalleistungen vom Mittelwert P tx mean
(ohne Dynamikkompression) bestimmen:
deltaPtx (i): = Ptx_mean

maximalen und minimalen Offset ermitteln:
deltaPtx_max: = max (deltaPtx (i))
deltaPtx_min: = min (deltaPtx (i))

Kompressionsfaktor berechnen:
compfact_tx: = Ptx_mean*(Dtx_max-1)...
...(deltaPtx_max-Dtx_max*deltaPtx_min)

komprimierte Pegel berechnen:
deltaPtx (i): = deltaPtx (i)*compfact_tx
Ptx (i): = Ptx_mean + deltaPtx (i)

( Ende Dynamikkompression )

Einstellung der neu berechneten Sendepegel
Kanäle i = 1...n

# FIG 3A

1) Bestimmung der Streckendämpfung oder
der OSNR-Güte für jeden Kanal
2) Berechnung der sendeseitigen Pegelverteilung Ptx (i)
für exakte OSNR-Balance
Kanäle i = 1...n
Pegel: Ptx (i)
Mittelwert: Ptx_mean

Start Dynamikkompression

Bestimmung der emfangsseitigen Pegeldynamik für exakte Balance:
RX-Dynamik  Drx: = (größter Pegel aus Prx (i)) / (kleinster Pegel aus Prx (i))

max. zulässiger
RX-Dynamikbereich überschritten ?
$Drx > Drx\_max$

ja

nein,
keine Dynamikkompression
erforderlich

Berechnung der Empfangspegel

Offsets der empfangsseitigen Kanalleistungen
vom Mittelwert bestimmen:
Prx_ mean = mittlere Kanalleistung empfangsseitig
deltaPrx (i): = Prx (i)-Prx_mean

maximalen und minimalen Offset (Empfangsseite) ermitteln:
deltaPrx_max: = max(deltaPrx (i))
deltaPrx_min: = min(deltaPrx (i))

empfangsseitigen Kompressionsfaktor berechnen:
compfact_rx: = Prx_mean*(Drx_max-1)...
.../ (deltaPrx (i)_max-Drx_max*deltaPrx_min)

komprimierte Empfangspegel berechnen:
Prx (i) = Prx_mean + deltaPrx (i)*compfact_rx

# FIG 3B

nein,
keine Dynamikkompression
erforderlich

**Berechnung der Sendepegel**

berechne erforderliche Sendepegel
für empfangsseitige Dynamikkompression:
Ptx_neu (i) = Prx (i)*Atten (i)

neuen sendeseitigen Mittelwert berechnen:
Ptx_mean_neu: = Summe(Ptx_neu (i)) / Kanalzahl

sendeseitigen Mittelwert-Korrekturfaktor berechnen:
corfact_tx: = Ptx_mean / Ptx_mean_neu

Sendepegel anpassen:
Ptx (i): = Ptx_neu (i)*corfact_tx

( Ende Dynamikkompression )

Einstellung der neu berechneten Sendepegel
Kanäle i = 1...n